# FASCICULE DE BREVET EUROPEEN

(11) **EP 3 265 657 B1**
(45) Date de publication et mention de la délivrance du brevet: **24.07.2019**
(21) Numéro de dépôt: 16714988.9
(22) Date de dépôt: 01.03.2016
(51) Int. Cl.: F01N 13/08, F01N 13/10, F01N 13/18, F16L 41/08

(54) **DISPOSITIF DE FIXATION D'UN COLLECTEUR DE GAZ D'ÉCHAPPEMENT**
VERBINDUNGSVORRICHTUNG FÜR EINEN ABGASSAMMLER
FIXATION DEVICE FOR EXHAUST GAS MANIFOLD

(30) Priorité: 03.03.2015 FR 1551775
(43) Date de publication de la demande: 10.01.2018
(73) Titulaire: Renault S.A.S., 92100 Boulogne-Billancourt (FR)
(72) Inventeur: DUMAS, Eric, 78800 Houilles (FR)
(86) Numéro de dépôt international: PCT/FR2016/050456
(87) Numéro de publication internationale: WO 2016/139414

(56) Documents cités:
- EP-A1- 1 571 305
- WO-A1-2011/113790
- DE-A1-102012 019 039
- FR-A1- 2 897 101
- US-A- 3 941 409

## Description

### Domaine technique de l'invention

La présente invention concerne un système de collecte de gaz d'échappement de moteur thermique de véhicule automobile.

La présente invention concerne plus particulièrement un système de fixation d'un collecteur d'échappement contre une paroi d'une culasse.

La présente invention concerne un moteur thermique de véhicule automobile.

### Etat de la technique

Les moteurs thermiques de véhicules automobiles comportent un collecteur connecté à une culasse dudit moteur pour récupérer des gaz d'échappement issus de la combustion de mélange air et combustible dans des cylindres en amont selon le sens de circulation des gaz. Le collecteur est généralement fixé par des brides et des boulons contre la paroi de ladite culasse de façon très rigide. Les différentes pièces de la culasse et du collecteur subissent cependant des échauffements variables entrainant des écarts de température importants. Des problèmes d'étanchéité apparaissent donc entre les différentes pièces en contact par suite des distorsions conséquences de cette fixation rigide et des contraintes de dilatation résultantes.

De plus l'espace du compartiment moteur est de plus en plus réduit entrainant des formes de fixation de collecteur sur culasse de plus en plus complexes pouvant diminuer la fiabilité de l'étanchéité desdites fixations. De plus, les moteurs sont de plus en plus léger et les culasses desdits moteurs sont issus de matériau léger comme l'aluminium alors que le collecteur est de manière générale en acier ou en fonte. Les caractéristiques thermiques des deux matériaux en contact entrainent une dilatation différentielle très importante que le système formé par la culasse et le collecteur doit compenser sous peine de fissure et de perte d'étanchéité.

Il est connu des moyens de fixation de collecteur d'échappement contre une culasse de moteur thermique qui permettent un certain degré de dilatation différentielle entre la culasse et le collecteur. Le collecteur est prolongé par des brides inférieures et supérieures de connexions. Lesdites brides inférieures et supérieures sont disposées de façon diamétralement opposées et les brides inférieures sont reçues dans une encoche dans la culasse tandis que les brides supérieures sont maintenues contre la culasse par une barrette fixée contre ladite culasse.

La publication US5918912 divulgue ainsi un moyen de fixation d'un collecteur d'échappement contre une paroi de culasse de moteur thermique. Ladite paroi de culasse comporte des surfaces de raccordement et le collecteur comprend à une extrémité de raccordement des brides supérieures et des brides inférieures. Lesdites brides inférieures sont enserrées dans les surfaces de raccordement et les brides supérieures sont maintenues contre la paroi de ladite culasse par des bretelles de serrage.

Une telle association de la culasse et du collecteur peut poser des problèmes à hautes températures, notamment pour une culasse en aluminium et un collecteur en acier ou en fonte du fait des différences de dilatation thermique très importantes entre les deux matériaux. Un jeu peut se créer et l'étanchéité entre le collecteur et la culasse n'est plus assurée. De plus, les surfaces de raccordement de la culasse nécessitent un usinage supplémentaire, ce qui engendre une étape de fabrication et un coût supplémentaires.

La publication FR-A1-2897101 divulgue un système de fixation d'un collecteur d'échappement contre une paroi de culasse de moteur thermique. Le collecteur comprend à une extrémité de connexion avec la culasse un élément de fixation comportant des surfaces de connexions en biseau. Le système de fixation est composé de deux barrettes en appui sur les surfaces de connexion en biseau et fixées contre la paroi de culasse.

Un inconvénient est que la dilatation différentielle de la culasse et du collecteur peut entrainer un soulèvement de la barrette supérieure entrainant ensuite un défaut d'étanchéité du système.

Un autre inconvénient est que la barrette supérieure est que la barrette ne présente pas de zones de déformation pour accompagner les dilatations différentielles entre le collecteur et la culasse.

La publication US-A1-2005/0268602 divulgue un dispositif de fixation d'un collecteur de gaz d'échappement contre une culasse de moteur, ledit collecteur comportant une bride inférieure fixée solidaire de la culasse et une bride supérieure diamétralement opposée et enserrée entre la culasse et une barrette de fixation ; la bride supérieure ou la barrette de fixation comportant une partie élastique. En-outre des autres exemples des dispositifs de fixation pour des collecteurs des gaz d'échappement peuvent être trouvés dans les publications suivantes: US 3941409 A, DE 102012019039 A1, EP 1571305 A1 ou FR 2897101 A1.

Un inconvénient est l'existence de jeu entre la barrette de fixation et la bride supérieure qui peut entrainer un défaut d'étanchéité.

Un autre inconvénient est que la partie élastique permet un écartement entre le collecteur et la culasse, ledit écartement peut entrainer un défaut d'étanchéité.

Le but de l'invention est de remédier à ces problèmes et un des objets de l'invention est un dispositif de fixation d'un collecteur de gaz d'échappement contre une paroi de culasse de moteur.

### Bref résumé de l'invention

La présente invention concerne plus particulièrement un dispositif de fixation d'un collecteur de gaz d'échappement contre une paroi de culasse de moteur selon la revendication 1.

La barrette de fixation comporte une deuxième plaque d'appui sur la bride supérieure du collecteur, ladite deuxième plaque présente une forme complémentaire à la bride supérieure pour assurer le maintien constant de la bride supérieure en appui contre la paroi de la culasse. La deuxième plaque comporte également une partie déformable pour absorber les différences de dilatation entre le collecteur et la paroi de la culasse.

Selon d'autres caractéristiques de l'invention :
- la bride inférieure entoure un axe d'un moyen de fixation.

La bride inférieure du collecteur entoure un axe d'un moyen de fixation, ce qui facilite la mise en place du collecteur contre la paroi de la culasse.
- la première plaque de la barrette forme avec la deuxième plaque d'appui un angle supérieur à 90° tourné à l'opposé de la paroi de la culasse.

De manière avantageuse, la première plaque de fixation est sensiblement orthogonale à la deuxième plaque d'appui, ce qui permet un encombrement réduit du dispositif de fixation du collecteur. De plus, ledit dispositif peut être disposé avantageusement pour fixer un collecteur contre une paroi de culasse comportant une pliure pour respecter des contraintes d'encombrement.
- la barrette de fixation comporte des raidisseurs de liaison entre la première plaque de fixation et la deuxième plaque d'appui.

De manière avantageuse, la barrette de fixation comporte au moins un raidisseur de liaison entre la première plaque de fixation et la deuxième plaque d'appui, ledit au-moins un raidisseur permet le maintien de l'angle entre les deux plaques de la barrette pour le maintien en appui de la bride supérieure contre la paroi de la culasse.
- la plaque de fixation et la plaque d'appui de la barrette sont obtenues par pliage d'une même plaque.

De manière avantageuse, la première plaque de fixation et la deuxième plaque d'appui de la barrette sont issues d'une même plaque par emboutissage ou pliage, ce qui permet une fabrication plus simple.
- la surface d'appui de la bride supérieure présente un profil en biseau.

De manière avantageuse, la surface d'appui de la bride supérieure du collecteur comporte un profil en biseau pour permettre un meilleur maintien contre la paroi de la culasse grâce à la deuxième plaque d'appui de forme complémentaire à la bride supérieure qui vient appuyer sur ladite surface.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
- la figure 1 représente une vue schématique du dispositif de fixation du collecteur contre la culasse.
- la figure 2 représente une vue schématique de la barrette de fixation.
- la figure 3 représente une vue de coupe longitudinale du dispositif de fixation selon un plan AA de la figure 1 orthogonal à la paroi de la culasse.

### Description détaillée des figures

Dans la description qui va suivre, des chiffres de référence identiques désignent des pièces identiques ou ayant des fonctions similaires.

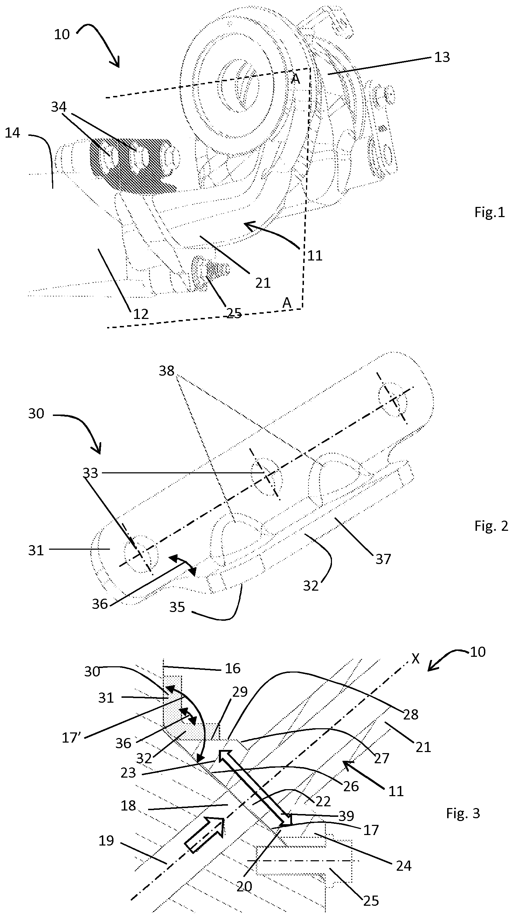

Ainsi que représenté dans la figure 1, un collecteur d'échappement 11 est fixé à une paroi 12 d'une culasse 14 d'un moteur thermique (non représenté) pour collecter les gaz d'échappement issus de la combustion dans les cylindres du moteur. Lesdits gaz d'échappement sont ensuite dirigés par exemple vers une turbine d'un turbocompresseur 13.

Le collecteur est fixé à une paroi de culasse 14 sur une surface sensiblement oblique par rapport à un plan vertical. Selon les figures 1 et 3, la paroi de la culasse présente une paroi sensiblement verticale 16 prolongée par une paroi oblique 17 sur laquelle le collecteur 11 est fixé en appui. La paroi oblique 17 forme ainsi avec la paroi verticale 16 de la culasse un angle de rabat 17' de l'ordre de 135°. Ladite paroi oblique 17 comporte un orifice d'échappement 18 par lequel débouche un conduit 19 d'échappement des gaz comme représenté en figure 3.

Le collecteur 11 comporte une bride d'extrémité 20 fixée à une extrémité d'un conduit d'amenée 21 des gaz vers la turbine du turbocompresseur. Ladite bride d'extrémité comporte un orifice d'entrée 22 connecté avec ledit conduit d'amenée 21 et sensiblement en vis-à-vis de l'orifice d'échappement 18 de la culasse 14. Les gaz d'échappement sont ainsi dirigés de façon optimale depuis la culasse jusqu'au turbocompresseur 13.

La bride d'extrémité 20 comporte une bretelle supérieure 23 et une bretelle inférieure 24 qui entoure un axe d'un moyen de fixation 25. Ledit moyen de fixation 25 est une vis enfoncée dans la paroi oblique 17 de la culasse 14. La bretelle inférieure 24 peut comporter un orifice entourant l'axe dudit moyen de fixation 25 ou deux dents entourant ledit axe. La bretelle inférieure 24 comporte un profil sensiblement en biseau, ce qui permet de diminuer la masse de matière et donc le poids du moteur.

La bretelle supérieure 23 comporte une plaque présentant une section transversale sensiblement trapézoïdale et comprenant une face inférieure 26 en contact avec la paroi oblique 17 de la culasse 14, une face supérieure opposée 27, et une face latérale d'appui 28 biseautée en périphérie de ladite bretelle supérieure 23. Ladite face latérale d'appui 28 présente ainsi un profil s'amincissant depuis l'intérieur connecté avec l'orifice d'entrée 22 vers la périphérie selon une pente d'angle sensiblement complémentaire à l'angle de rabat 17'. Lorsque le collecteur est fixé contre la paroi oblique 17 de la culasse, ladite face d'appui est sensiblement orthogonale à la paroi verticale 16 da la culasse 14. Ladite face d'appui 28 comporte une surface de contact 29 sensiblement rectangulaire avec une largeur supérieure au diamètre du conduit d'amenée de gaz et une profondeur.

Le dispositif selon l'invention comporte une barrette de fixation 30 représentée en figure 2. Ladite barrette de fixation 30 comprend une plaque de fixation 31 et une plaque d'appui 32.

La plaque de fixation 31 comporte ainsi des orifices de fixation 33 sensiblement alignés et qui sont traversés par des vis de fixation 34 enfoncées dans la paroi verticale 16 de la culasse 14.

La plaque d'appui 32 comporte une surface d'appui 35 sensiblement complémentaire à la surface de contact 29 de la face d'appui 28 de la bretelle supérieure 23. De manière préférentielle, ladite plaque d'appui comporte une largeur sensiblement supérieure au diamètre du conduit d'amenée des gaz et une profondeur supérieure à la profondeur de la surface de contact. Ladite surface d'appui 35 est en contact constant avec la surface de contact 29 de la bretelle supérieure 23. La plaque d'appui fait donc un angle d'écartement 36 avec la plaque de fixation supérieur ou égal à 90°. La plaque d'appui comporte une partie élastique déformable 37. Ladite partie déformable de la plaque d'appui 32 recouvre la surface de contact 29 de la bretelle supérieure.

De manière préférentielle, la plaque d'appui et la plaque de fixation sont obtenue d'une même plaque par emboutissage ou pliage, ladite plaque est par exemple en acier HE650D à haute limite élastique. L'épaisseur de la plaque d'appui est de l'ordre de 4 mm pour autoriser une déformation élastique selon un axe orthogonal à ladite plaque.

La barrette de fixation 30 comporte au moins un raidisseur 38 disposé entre la plaque de fixation et la plaque d'appui pour maintenir l'angle d'écartement 36 à la valeur initiale à froid. De manière préférentielle, le au moins un raidisseur s'étend sur une portion réduite de la plaque d'appui afin de ne pas réduire la possibilité de déformation de la plaque d'appui. Selon la figure 2, le au moins un raidisseur 38 comprend un bossage ou une nervure s'étendant sensiblement sur un quart de la profondeur de la plaque d'appui.

Le passage des gaz à très haute température provoque un échauffement très important du conduit d'amenée 21 du collecteur 11 et de la bride d'extrémité 20. La chaleur se répand donc sensiblement radialement par rapport à l'axe X d'écoulement des gaz. La bride d'extrémité 20 est alors susceptible de se déformer selon un gradient de température sensiblement radial. La bretelle supérieure 23 est alors susceptible de s'étendre radialement et les efforts générés par ladite dilatation sont alors transmis principalement par la face d'appui 28 en biseau. La bretelle supérieure 23 est alors susceptible de pousser sensiblement sur la plaque d'appui 32 qui va se déformer en flexion de façon élastique et sensiblement radialement par rapport au conduit d'amenée des gaz. L'angle d'écartement reste constant et maintient la bride d'extrémité en appui contre la paroi oblique de la culasse. La dilatation de la bride 20 est alors absorbée par la déformation élastique de la plaque d'appui 32.

Lorsque le moteur est en arrêt, à froid, la plaque d'appui reprend sa forme originelle et reste en appui sur la face d'appui de la bretelle supérieure pour maintenir en appui la bride d'extrémité contre la paroi de la culasse.

L'objectif est atteint par le dispositif de fixation 10 du collecteur. A froid ou à chaud lors du passage des gaz d'échappement, le dispositif de fixation maintient le collecteur d'échappement en appui contre la paroi de la culasse pour éviter des défauts d'étanchéité. Ledit dispositif de fixation 10 comporte une barrette de fixation apte à absorber les effets de la dilatation transversale de la bride d'extrémité du collecteur. Comme il va de soi, l'invention ne se limite pas aux seules formes d'exécution de cette prise, décrites ci-dessus à titre d'exemples, elle en embrasse au contraire toutes les variantes. C'est ainsi notamment que la paroi de la culasse peut être simplement plane et ne pas présenter de décrochement au niveau de l'ouverture d'échappement. L'angle d'écartement peut alors être supérieur à 90° et proche de 135°.

## Revendications

1. Dispositif de fixation (10) d'un collecteur (11) de gaz d'échappement contre une paroi de culasse (14) de moteur thermique qui présente une paroi sensiblement verticale (16) prolongée par une paroi oblique (17) sur laquelle le collecteur (11) est fixé en appui, ledit collecteur étant prolongé par une bride (20) d'extrémité comprenant une bretelle inférieure (24) fixée solidaire de la culasse et une bretelle supérieure (23) diamétralement opposée comportant une surface de contact (29), ledit dispositif comprenant une barrette de fixation (30) comportant une plaque de fixation (31) contre la paroi verticale (16) de la culasse et une plaque d'appui (32) sur la bretelle supérieure, présentant une forme complémentaire à la surface de contact (29) de la bretelle supérieure et comportant une partie élastique déformable.
**caractérisé en ce que** la bretelle inférieure (24) entoure un axe d'une vis de fixation (25) enfoncée dans la paroi oblique (17) de la culasse (14) et présente un profil en biseau.

2. Dispositif de fixation selon la revendication 1, **caractérisé en ce que** la plaque de fixation (31) de la barrette forme avec la plaque d'appui (32) un angle supérieur à 90° tourné à l'opposé de la paroi de la culasse (14).

3. Dispositif de fixation selon l'une quelconque des revendications 1 à 2, **caractérisé en ce que** la barrette de fixation comporte au moins un raidisseur (38) de liaison entre la plaque de fixation (31) et la plaque d'appui (32).

4. Dispositif de fixation selon l'une quelconque des revendications 1 à 3, **caractérisé en ce que** la plaque de fixation (31) et la plaque d'appui (32) de la barrette sont obtenues par emboutissage d'une même plaque.

5. Dispositif de fixation selon l'une quelconque des revendications 1 à 4, **caractérisé en ce que** la bretelle supérieure (23) de la bride d'extrémité (20) présente un profil en biseau s'amincissant vers la périphérie extérieure.

## Patentansprüche

1. Vorrichtung (10) zur Befestigung eines Abgaskrümmers (11) an einer Wand des Zylinderkopfs (14) eines Verbrennungsmotors, der eine im Wesentlichen vertikale Wand (16) aufweist, die durch eine schräge Wand (17) verlängert ist, an der der Krümmer (11) in Anlage befestigt ist, wobei der Krümmer durch einen Endflansch (20) verlängert ist, der ein unteres Band (24), das mit dem Zylinderkopf fest verbunden ist, und ein oberes Band (23) diametral gegenüber, das eine Kontaktfläche (29) aufweist, umfasst, wobei die Vorrichtung einen Befestigungssteg (30) umfasst, der eine Platte (31) zur Befestigung an der vertikalen Wand (16) des Zylinderkopfs und eine Platte (32) zur Anlage an dem oberen Band umfasst, die eine zu der Kontaktfläche (29) des oberen Bands komplementäre Form aufweist und einen elastisch verformbaren Teil umfasst,
**dadurch gekennzeichnet, dass** das untere Band (24) eine Achse einer Befestigungsschraube (25) umgibt, die in der Schrägen Wand (17) des Zylinderkopfs (14) eingetrieben ist, und ein abgeschrägtes Profil aufweist.

2. Befestigungsvorrichtung nach Anspruch 1, **dadurch gekennzeichnet, dass** die Platte (31) zur Befestigung des Stegs mit der Anlageplatte (32) einen Winkel von über 90° bildet, der von der Wand des Zylinderkopfs (14) abgewandt ist.

3. Befestigungsvorrichtung nach einem der Ansprüche 1 bis 2, **dadurch gekennzeichnet, dass** der Befestigungssteg mindestens eine Versteifung (38) der Verbindung zwischen der Befestigungsplatte (31) und der Anlageplatte (32) umfasst.

4. Befestigungsvorrichtung nach einem der Ansprüche 1 bis 3, **dadurch gekennzeichnet, dass** die Befestigungsplatte (31) und die Anlageplatte (32) des Stegs durch Ziehen einer gleichen Platte erhalten werden.

5. Befestigungsvorrichtung nach einem der Ansprüche 1 bis 4, **dadurch gekennzeichnet, dass** das obere Band (23) des Endflansches (20) ein abgeschrägtes Profil aufweist, das sich zu dem Außenumfang hin verjüngt.

## Claims

1. Device (10) for attaching an exhaust gas collector (11) to a wall of the cylinder head (14) of a heat engine which exhibits a substantially vertical wall (16) extended by an inclined wall (17), resting against which the collector (11) is attached, said collector being extended by an end flange (20) comprising a lower strip (24) secured to the cylinder head and a diametrically opposite upper strip (23) including a contact surface (29), said device comprising an attachment bar (30) including a plate (31) for attachment to the vertical wall (16) of the cylinder head and a plate (32) for pressing against the upper strip, having a shape which is complementary to the contact surface (29) of the upper strip and including a deformable elastic part,
**characterized in that** the lower strip (24) surrounds an axis of an attachment screw (25) embedded in the inclined wall (17) of the cylinder head (14) and exhibits a beveled profile.

2. Attaching device according to Claim 1, **characterized in that** the plate (31) for the attachment of the bar forms, together with the pressure plate (32), an angle greater than 90° facing away from the wall of the cylinder head (14).

3. Attaching device according to either one of Claims 1 and 2, **characterized in that** the attachment bar includes at least one stiffener (38) of the connection between the attachment plate (31) and the pressure plate (32).

4. Attaching device according to any one of Claims 1 to 3, **characterized in that** the attachment plate (31) and the pressure plate (32) of the bar are obtained by stamping the same plate.

5. Attaching device according to any one of Claims 1 to 4, **characterized in that** the upper strip (23) of the end flange (20) exhibits a beveled profile tapering towards the outer periphery.
